# FASCICULE DE BREVET EUROPEEN

(11) **EP 2 805 392 B1**
(45) Date de publication et mention de la délivrance du brevet: **18.05.2016**
(21) Numéro de dépôt: 13704169.5
(22) Date de dépôt: 17.01.2013
(51) Int. Cl.: H02G 3/00

(54) **PROCÉDÉ DE RACCORDEMENT, RACCORD DE DÉRIVATION ÉQUIPOTENTIEL ET RÉSEAU DE RETOUR COURANT À LIAISON ÉQUIPOTENTIELLE DANS UNE ARCHITECTURE NON CONDUCTRICE**
VERBINDUNGSVERFAHREN, SPANNUNGSAUSGLEICHSNEBENSCHALTUNG UND SPANNUNGSAUSGLEICHSVERBINDUNGSRÜCKFÜHRUNGSNETZ IN EINER NICHTLEITENDEN ARCHITEKTUR
CONNECTION METHOD, EQUIPOTENTIAL SHUNT CONNECTION AND EQUIPOTENTIAL BONDING CURRENT RETURN NETWORK IN A NON-CONDUCTIVE ARCHITECTURE

(30) Priorité: 20.01.2012 FR 1250597
(43) Date de publication de la demande: 26.11.2014
(73) Titulaire: LABINAL POWER SYSTEMS, 31700 Blagnac (FR); Mecatraction, 19230 Arnac Pompadour (FR)
(72) Inventeur: BIESSE, Jean-Luc, F-81500 Saint Lieux Les Lavaur (FR); ALBERO, Franck, F-31830 Plaisance du Touch (FR); ANDRAUD, Samuel, F-24160 Salagnac (FR); BOUTOT, David, F-19130 Lascaux (FR)
(74) Mandataire: Gevers & Orès
(86) Numéro de dépôt international: PCT/FR2013/050104
(87) Numéro de publication internationale: WO 2013/107986

(56) Documents cités:
- EP-A1- 2 218 641
- WO-A1-2007/075934
- DE-A1- 19 937 510
- FR-A1- 2 914 622
- US-A- 4 976 627

## Description

### DOMAINE TECHNIQUE

L'invention concerne un procédé de raccordement à liaison équipotentielle d'un réseau de câblage électrique de retour de courant dans une architecture, en particulier un fuselage d'avion, un wagon, un bâtiment ou un véhicule automobile. L'invention s'applique en particulier aux réseaux électriques des avions de nouvelle génération à peau constituée par un matériau composite. L'invention se rapporte également à un raccord de dérivation équipotentiel et à un réseau de retour de courant comportant de tels raccords de dérivation équipotentiel pour mettre en oeuvre ledit procédé dans une architecture non conductrice.

Le matériau composite de cette nouvelle génération de peau comporte un matériau hétérogène à base de fibres de carbone. Classiquement, les fonctions de maillage du câblage électrique étaient réalisées par la peau en aluminium de l'ancienne génération, en particulier : le retour de courant des équipements consommateurs, la mise au même potentiel de toutes les pièces métalliques, la protection CEM (Compatibilité Electromagnétique) de l'installation électrique, les écoulements des courants de foudre - indirects et induits - ainsi que des charges électrostatiques.

L'invention vise ainsi à s'appliquer à toute structure où le passage de l'électricité nécessite la conservation d'au moins certaines de ces fonctions d'interconnexion lorsque l'enveloppe de la structure ou architecture n'est pas conductrice.

### ÉTAT DE LA TECHNIQUE

Les matériaux composites carbone sont de médiocres conducteurs de l'électricité et supportent mal les échauffements provoqués par effet Joule. Un tel revêtement ne peut donc pas être utilisé pour assurer les fonctions ci-dessus.

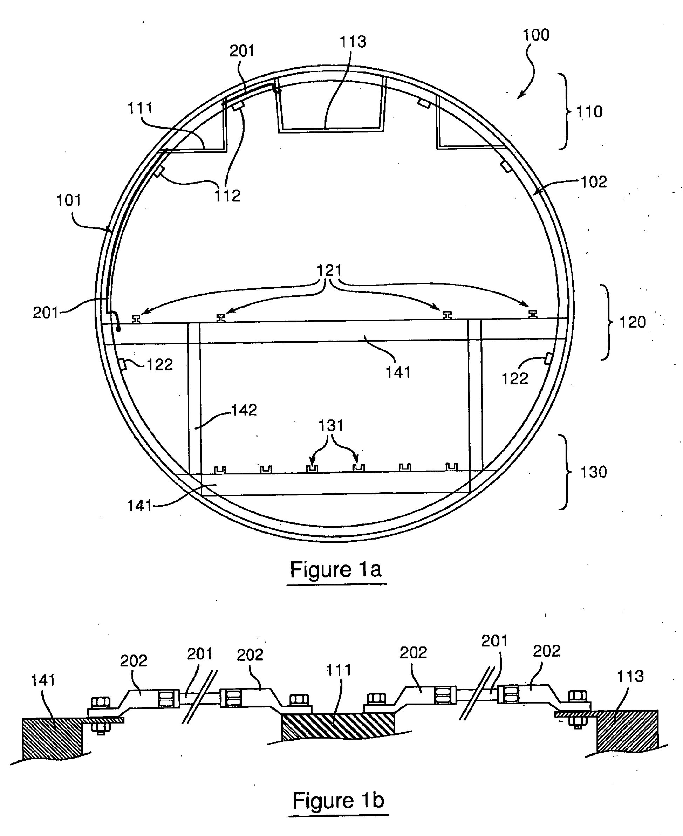

Pour permettre la mise en oeuvre des fonctions de liaison de câblage électrique dans le cas d'un avion à peau composite, une architecture composée de pièces métalliques est habituellement mise en place pour former un réseau électrique. Globalement, comme illustré par la vue en coupe d'un fuselage d'avion 100 de la figure 1 a, un tel réseau est monté le long de cadres structuraux en carbone 102 du fuselage 100. Ce fuselage, qui comporte essentiellement une peau externe 101 en matériau composite enveloppant les cadres 102, est constitué en matériau mauvais conducteur de l'électricité. Le réseau se compose plus précisément de trois réseaux primaires longitudinaux, à savoir :
- un réseau de retour 110 en partie supérieure du fuselage, dit « réseau supérieur » comportant, entre autres, des supports métalliques 111 de coffres à bagage, des chemins de câbles profilés 112 et un support central métallique 113;
- un réseau de retour « médian » en partie médiane 120, comprenant, entre autres, des rails de siège profilés 121, et des chemins de câbles profilés 122 et
- un réseau de retour en partie inférieure 130, dit « réseau inférieur », à base de rails cargo métalliques profilés 131, entre autres.

Ces réseaux longitudinaux sont interconnectés transversalement par des traverses métalliques 141 reliées par des bielles de structure 142 et par des liaisons filaires comme expliqué ci-après. Un maillage de réseaux de retour courant est ainsi créé afin d'augmenter la sûreté de fonctionnement.

Tout conducteur destiné à réaliser une liaison équipotentielle devrait posséder les propriétés fondamentales suivantes : être un excellent conducteur de l'électricité (ou, en d'autres termes, assurer une performance en résistivité extrêmement basse), posséder une faible densité afin de minimiser la masse, rester impérativement économique en termes de coût, et satisfaire aux autres performances techniques (durée de vie, tenue en environnement, etc.). L'aluminium est le matériau qui satisfait au mieux à l'ensemble de ces critères. Les liaisons équipotentielles sont donc en général réalisées à partir de tronçons de câble de grosse ou forte section en aluminium, c'est-à-dire de section supérieure à celle de la jauge dite « AWG 10 » - soit de section supérieure à environ 5 mm² - choisis parmi les séries dédiés au domaine aéronautique.

Comme illustré par le schéma en vue frontale de la figure 1 b, des liaisons équipotentielles sont formées par ce type de câbles 201 en reliant par exemple les supports porte-bagages 111 au support central 113 du réseau de retour supérieur d'une part et aux traverses métalliques 141 du réseau de retour médian d'autre part. Entre chaque support porte-bagage 111 et les supports de réseau de retour 113 ou 141, pas moins de sept résistances électriques équivalentes sont traversées : les deux résistances des interfaces entre les supports métalliques 111 et 113 ou 141 et les cosses 202 de fixation, les deux résistances électriques du corps de cosses 202, les deux résistances d'interface entres les cosses 202 et les câbles 201 ainsi que la résistance électrique linéaire du tronçon de câble 201 de grosse section. En présence de supports porte-bagages 111, comme dans l'exemple illustré, il convient d'ajouter la résistance des pièces conductrices de ce support.

Afin de réduire la durée du cycle final d'assemblage des pièces sur la chaîne de montage, les cosses peuvent être remplacées par des connecteurs unipolaires présentant une partie mobile et une partie fixe. Dans certains cas, deux tronçons de câbles sont raccordés directement l'un à l'autre par empilement de deux cosses à l'aide d'un goujon ou d'une barrette à bornes.

Lorsque des équipements sont situés loin des pièces métalliques constituant les supports des réseaux de retour, la connexion de ces équipements aux réseaux de retour de courant est réalisée au plus près de ces équipements en raison, notamment, de la nécessité de maîtriser les chutes de tension en ligne. De telles connexions sont en général réalisées par des supports intermédiaires métalliques rigides ou souples selon l'intensité des efforts à transmettre simultanément. Ces liaisons induisent alors des résistances parasites additionnelles. Sur ces supports sont fixées les cosses de liaison à chaque portion de câble reliée à un réseau de retour supérieur 110 et intermédiaire 120 ainsi qu'à l'équipement concerné. Ce support intermédiaire introduit des résistances électriques équivalentes supplémentaires dans le réseau global, à savoir entre les réseaux de retour et entre chaque réseau de retour et ledit équipement.

Une jonction triple par goujons ou barrettes à bornes est également possible à la place du support intermédiaire. Chaque goujon ou barrette génère deux résistances électriques équivalentes d'interface entre les cosses.

Ces solutions présentent l'inconvénient majeur de prévoir une coupure de la liaison équipotentielle, ce qui induit une diminution de la fiabilité, une augmentation de la masse et du coût.

Outre les cosses et les connecteurs unipolaires, l'interconnexion électrique des câbles de grosse section utilise également des prolongateurs.

Cependant, cette connectique, qui est actuellement utilisée pour réaliser des liaisons équipotentielles, a été conçue à l'origine pour n'effectuer que des connexions en extrémité de câbles en alliage d'aluminium de grosse section. Cette approche conduit à interconnecter bout à bout des tronçons de câble de grosse section pour réaliser des liaisons équipotentielles entre les différentes parties du réseau de retour de courant décrit ci-dessus.

Or le besoin actuel, qui apparaît notamment sur les fuselages d'avions en matériau composite, est le raccordement en dérivation sur des liaisons équipotentielles filaires d'une structure de réseaux de retour de courant réalisée en plusieurs parties : partie supérieure, médiane et inférieure. Comme illustré par les moyens de connexion décrits ci-dessus avec des parties intermédiaires pénalisantes en termes de résistance équivalente, les solutions connues ne permettent pas de réaliser des liaisons équipotentielles qui soient à la fois performante : électriquement, en termes de masse, de coût et de fiabilité. Ainsi, l'augmentation de la jauge des câbles de liaisons entraîne :
- une augmentation de la masse des câbles ainsi que de la connectique et des supports intermédiaires associés ;
- une augmentation du coût de la nomenclature ;
- une allocation de cheminement à redéfinir à la hausse.

### EXPOSÉ DE L'INVENTION

L'invention vise alors à pallier les inconvénients des moyens de connectique connus en simplifiant les interconnexions tout en préservant les performances. En particulier, pour des raisons de sécurité, l'invention vise à réaliser des liaisons équipotentielles entre des parties du réseau de retour électriquement performantes en termes de faible résistivité, avec par exemple une résistance équivalente globale de l'ordre de quelques milliohms. De plus, l'invention préserve les fonctions d'interconnexion définies pendant toute la durée de vie de l'avion, alors que la multiplication des tronçons de câble dégrade la fiabilité prévisionnelle du réseau de retour de courant global.

L'approche suivie par l'invention est de conférer au câble de grosse section en aluminium une fonction de type liaison équipotentielle, cette liaison étant raccordée électriquement par contact direct à autant d'équipements qu'il est physiquement possible d'en connecter.

Plus précisément, la présente invention a pour objet un procédé de raccordement à liaison équipotentielle d'un réseau de retour de courant selon les caractéristiques de la revendication 1, et d'un réseau de retour de courant selon les caractéristiques de la revendication 6 tel que celui utilisé dans la revendication 1.

Selon des modes de mise en oeuvre préférés :
- les assemblages de chaque raccordement sont réalisés par des techniques de solidarisation choisies parmi le vissage, le rivetage, le brasage, le soudage, le sertissage et le frettage ;
- une matière conductrice est appliquée sur le dénudage de gaine avant assemblage de chaque interconnexion pour améliorer le contact électrique et empêcher l'oxydation ;
- alternativement, un traitement de surface métallique est appliqué;
- chaque raccordement présente une zone d'assemblage électrique décalée par rapport à une zone de fixation de l'interconnexion.

L'invention se rapporte également à un raccord de dérivation équipotentiel en ligne entre un câble à base d'alliage d'aluminium de forte section, servant de liaison équipotentielle de réseaux primaires de retour de courant d'une architecture non conductrice, et un équipement électrique de cette architecture. Ce raccord de dérivation comporte un manchon métallique sensiblement cylindrique d'assemblage au câble par un moyen de solidarisation et un moyen de fixation prolongeant le manchon pour venir se fixer à un support de l'équipement. Le manchon d'assemblage se compose de deux portions d'extrémité logeant chacune un joint d'étanchéité et entourant une zone centrale de contact électrique avec le câble préalablement dénudé dans une fenêtre formée à l'intérieur de la zone centrale.

Selon des modes de réalisation particuliers :
- des encoches sont prévues sur au moins une portion d'extrémité du manchon pour ajuster son positionnement angulaire par rapport au câble de liaison équipotentielle avant solidarisation ;
- le moyen de solidarisation est un sertissage par poinçon et matrice ;
- les portions d'extrémité du manchon sont serties sur une gaine isolante du câble avec un outillage du type dédié aux cosses en aluminium ;
- le manchon possède une paroi interne recouverte d'une couche de protection métallique anticorrosion ;
- alternativement, l'âme dénudée du câble est enduite d'une couche de graisse conductrice ;
   ▪ un évidement est formé entre le manchon et le câble, et entre la fenêtre dénudée du câble et au moins un joint d'une portion d'extrémité du manchon de sorte à pouvoir recueillir un excès de graisse formé lors du sertissage sans emprisonner cette graisse entre le joint et le câble ;
   ▪ alternativement, un canal est formé à travers le manchon pour injecter la quantité de graisse conductrice de sorte que son extrémité débouche dans la zone de sertissage électrique entre la fenêtre dénudée du câble et la face interne du manchon, le sertissage étant apte à obturer ensuite ce canal après orientation du manchon à l'aide des encoches ;
- la zone de sertissage électrique est axialement décalée par rapport au moyen de fixation dans la zone centrale du manchon.

### PRÉSENTATION DES FIGURES

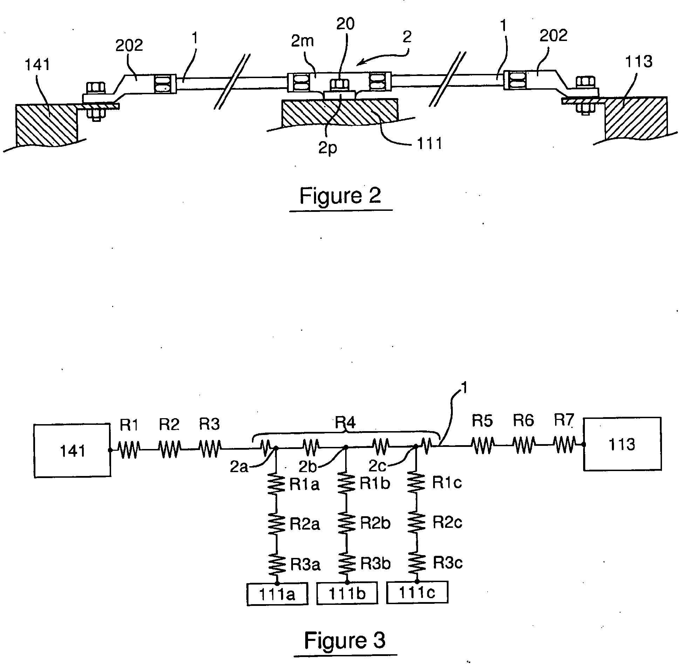

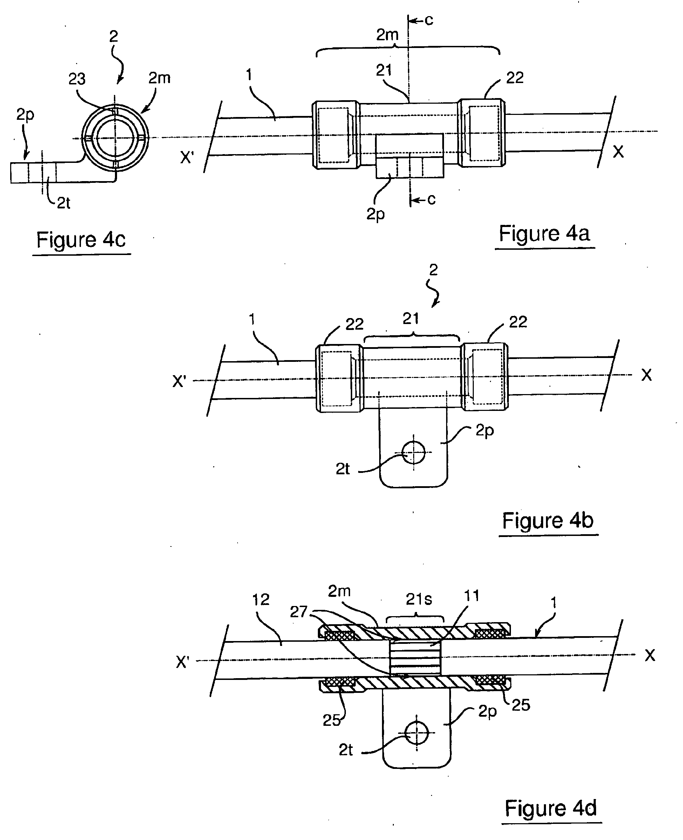

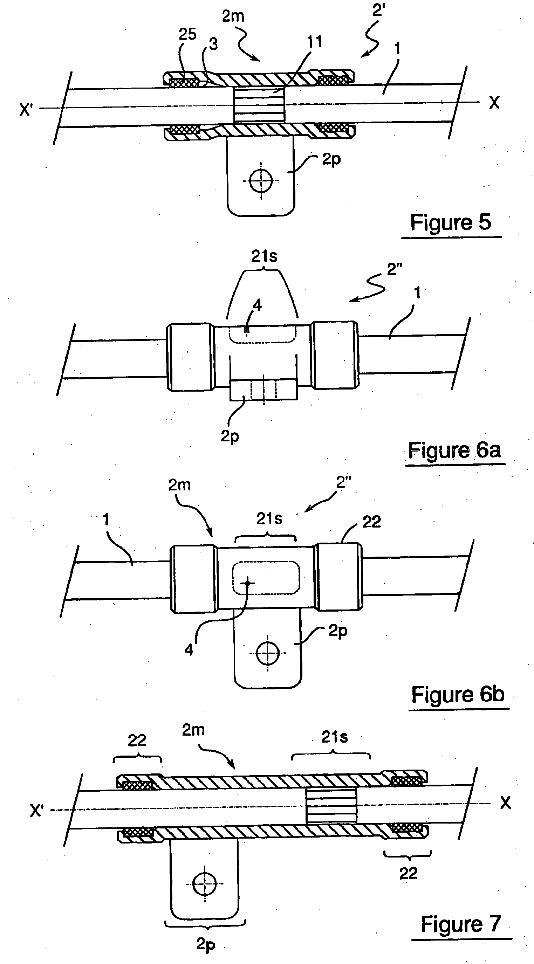

D'autres aspects et particularités de la mise en oeuvre de l'invention apparaîtront à la lecture de la description détaillée qui suit, accompagnée de dessins annexés qui représentent, respectivement :
- en figures 1 a et 1 b, une vue en coupe d'un fuselage d'avion, d'un réseau de retour courant et un schéma des liaisons équipotentielles entre les réseaux primaires selon l'état de la technique (déjà commentée) ;
- en figure 2, un schéma en vue frontale d'un exemple de raccordement à liaison équipotentielle sous forme de liaison entre des réseaux primaires et un support d'équipement selon l'invention ;
- en figure 3, un schéma de résistances électriques équivalentes dans le cas du couplage de trois équipements sur la liaison selon la figure précédente ;
- en figures 4a à 4d, des vues frontale (4a), supérieure (4b) ainsi qu'en coupe transversale (4c) et longitudinale (4d) d'un exemple de raccord de dérivation sur une liaison selon l'invention;
- en figure 5, une vue en coupe longitudinale d'un exemple de raccord de dérivation comportant un évidement destiné à recevoir les excès de graisse conductrice ;
- en figures 6a et 6b, des vues en coupe longitudinale et supérieure d'un exemple de raccord de dérivation comportant un orifice d'injection de graisse conductrice ; et
- en figure 7, une vue en coupe d'un exemple de raccord de dérivation comportant une zone de sertissage électrique et un moyen de fixation axialement décalés.

### DESCRIPTION DÉTAILLÉE

Des signes de référence identiques ou présentant une racine commune, utilisés dans les différentes figures, se rapportent à des éléments identiques ou techniquement équivalents. Les termes « supérieur », « médian » et « inférieur » se réfèrent au positionnement relatif en mode standard d'utilisation ou de montage. Les termes « longitudinal » et « transversal » qualifient des éléments s'étendant selon une direction et un plan perpendiculaire à cette direction.

En référence au schéma de la figure 2, un raccordement à liaison équipotentielle se présente sous la forme d'un câble 1, de section 35mm² par exemple, à base d'aluminium. Dans l'exemple illustré, ce câble 1 sert de liaison équipotentielle entre le retour de réseau médian 120 et le retour de réseau supérieur 110 présentés en figure 1 a. Le câble 1 et les supports métalliques 113 et 141, respectivement des réseaux supérieur 110 et médian 120, sont liés par les cosses 202.

Un équipement proche de la liaison 1 et relié au support porte-bagages 111 est interconnecté électriquement à cette liaison par un raccord de dérivation équipotentiel en ligne 2 - ci-après « raccord de dérivation » - intermédiaire entre les deux extrémités du câble Le raccord de dérivation 2 comporte dans l'exemple un manchon cylindrique central 2m et une patte 2p fixée au support 111 par une vis 20. Le câble n'étant pas interrompu, seules trois résistances sont en jeu dans ce couplage : la résistance d'interface entre le câble 1 et le raccord de dérivation 2, la résistance du corps du raccord de dérivation 2 et la résistance de l'interface entre le raccord de dérivation 2 et le support 111.

Le nombre et la valeur extrêmement faibles des résistances en jeu dans le couplage, typiquement bien inférieur au milliohm. Ce principe de liaison permet d'atteindre une performance de résistance électrique totale optimisée inchangée quel que soit le nombre d'interconnexions intermédiaires. Ainsi, la figure 3 reproduit le raccordement de trois équipements de supports 111 a, 111 b, 111c sur le câble 1 par les raccords de dérivation 2a à 2c selon un schéma électrique de résistances équivalentes, dans lequel :
- R1 et R7 désignent les résistances des interfaces entre les cosses 202 et les supports supérieur 113 et médian 141 couplés au câble 1 en ses extrémités ;
- R3a à R3c représentent les résistances de l'interface entre les raccords de dérivation 2a à 2c et les supports 111 a à 111 c des équipements ;
- R2 et R6 : les résistances du corps des cosses 202 ;
- R3 et R5 : les résistances d'interface entre le câble 1 et les cosses 202 ;
- R2a à R2c: les résistances du corps des raccords de dérivation 2a à 2c;
- R1 a à R1 c: les résistances des interfaces entre le câble 1 et les raccords de dérivation 2a à 2c, et
- R4 : la résistance du câble 1 qui traverse d'un seul tenant tous les raccords de dérivation 2a à 2c sans coupure.

Les liaisons entre les supports des équipements 111 a à 111 c étant montées successivement en parallèle sur le câble 1, la résistance électrique totale de la liaison entre les extrémités du câble 1 reliées aux supports 113 et 141 ne varie pas. De plus, la résistance électrique totale entre l'un quelconque des équipements et le réseau de retour de courant formé par les deux réseaux primaires 110 et 120 (figure 2) est minimisée et reste la même quel que soit le nombre d'équipements.

En référence aux vues des figures 4a à 4d, un exemple de raccord de dérivation 2 sur une liaison 1 selon l'invention est illustré de manière détaillée. Sur les vues frontale et supérieure des figures 4a et 4b, il apparaît que le raccord de dérivation 2 comporte une zone centrale 21 prolongée à chaque extrémité par une zone d'étanchéité 22, ces zones formant le manchon cylindrique 2m (cf. figure 2). De plus, la zone centrale 21 est prolongée transversalement par la patte de fixation 2p comportant un trou de fixation 2t (traversé par la vis de fixation 20 de la figure 2).

La vue en coupe transversale de la figure 4c selon le plan CC met en évidence la présence d'encoches 23 formées dans au moins l'une des zones d'extrémité 22. Ces encoches permettent de réaliser l'orientation angulaire radiale du raccord de dérivation 2 par rapport au câble 1 conformément aux indications du gabarit indiquées sur le câble.

La vue en coupe de la figure 4d montre le résultat de la préparation du câble 1 le long de son axe X'X. Cette préparation consiste en un dénudage sur une fenêtre de son âme 11 par l'élimination de sa gaine isolante 12 dans une zone de sertissage 21 s centrée dans la zone 21. La vue 4d montre également les joints cylindriques d'étanchéité 25 agencés dans les zones d'extrémité 22. De plus, il apparaît que la patte de fixation 2p se trouve axialement sensiblement alignée selon l'axe X'X avec la fenêtre d'âme dénudée 11.

Un sertissage électrique est ensuite réalisé dans la zone de sertissage électrique 21s située dans la zone centrale 21. Ce sertissage est du type « sertissage profond » réalisée par similitude avec le sertissage pour les cosses en aluminium, en adaptant poinçons et matrices à la géométrie du raccord de dérivation.

Avantageusement, une couche de protection métallique 27 anticorrosion est déposée sur la paroi interne du raccord de dérivation 2 au niveau de la zone de sertissage centrale 21. Cette protection assure un excellent contact électrique entre l'âme dénudée 11 et la paroi interne du coupleur.

Un sertissage mécanique est ensuite effectué pour réaliser l'étanchéité du sertissage électrique. Les zones d'étanchéité 22 qui renferment les joints d'étanchéité 25 sont serties sur la gaine isolante 12 du câble 1 avec un outillage du même type que celui utilisé pour les cosses aluminium. Ainsi les performances d'étanchéité sont équivalentes, à taille semblable, à celles requises pour les cosses.

Il peut être également avantageux d'utiliser une graisse conductrice à la place des traitements de surface, par exemple pour des câbles à âme en aluminium sans protection de surface métallique. Un tel apport peut également être avantageux lorsque les âmes sont constituées de brins d'aluminium, chemisés par exemple par du cuivre et nickelés.

Pour ce faire, l'âme 11 dénudée est préalablement enduite d'une fine couche de graisse conductrice de l'électricité. En référence à la vue en coupe longitudinale de la figure 5, la cosse de dérivation en ligne 2' est conformé de sorte à présenter un évidemment périphérique 3. Lors de l'installation du coupleur 2', le surplus de graisse est concentré dans l'évidemment 3. Le volume de l'évidemment est prédéterminé de sorte qu'il puisse largement recevoir tout le volume de graisse potentiellement possible. Cet évidement permet au joint 25, agencé à proximité de la zone de sertissage électrique 21s et inséré dans son logement, de ne pas être serti sur la graisse. Dans ce but, après orientation du coupleur par les encoches (cf. figure 4c), les sertissages sont ensuite réalisés.

Alternativement à l'évidement, une autre réalisation consiste à prévoir un canal d'injection de graisse. En référence aux vues en coupe et supérieure des figures 6a et 6b, un canal cylindrique 4 traverse le raccord de dérivation 2" dans la zone centrale 21s, perpendiculairement à son axe longitudinale X'X (confondu avec celui du câble 1). Alternativement, le canal peut être d'axe incliné. Ce canal 4 présente un diamètre suffisant pour injecter rapidement la quantité de graisse nécessaire et pour permettre - après orientation du raccord de dérivation en fonction des spécifications du gabarit et sertissage de la zone centrale 21s - l'obturation de ce canal par le déplacement de matière provoqué par ce sertissage. Cette obturation garantie l'étanchéité de la zone de sertissage 21 s.

Afin de pouvoir réutiliser certains outillages (poinçons et matrices) pour la mise en forme des cosses, il est avantageux de prévoir un décalage axial entre la patte de fixation et la zone de sertissage électrique du raccord de dérivation. En référence à la vue en coupe longitudinale de la figure 7, il apparaît que le manchon 2m du coupleur 2"' est suffisamment long pour que la zone de sertissage 21 s de l'âme dénudée 11 et la patte de fixation 2p soit axialement décalées selon l'axe X'X sans recouvrement axial.

L'invention n'est pas limitée aux exemples de réalisation décrits et représentés. En particulier, les dimensions du raccord de dérivation sont adaptables en fonction de la jauge et de la gaine isolante des câbles. Le traitement de surface de la paroi interne des raccords de dérivation est également adaptable par nickelage, étamage, etc.. De plus, toutes les techniques d'assemblage entre du raccord de dérivation et la structure, qui permettent de réaliser à la fois une connexion électrique et une connexion mécanique, à travers des montages adaptées (fixations multiples, verticales ou via une cloison) sont utilisables : vissage, rivetage, brasage, soudage, frettage, etc.

Par ailleurs, des composés conducteurs ou non conducteurs peuvent également remplacer les traitements de surface métalliques ou remplacer les joints latéraux d'étanchéité. En outre, dans la réalisation faisant intervenir de la graisse conductrice, le canal d'injection ou l'évidement de récupération peuvent être remplacés par tout autre moyen de réserve ou d'injection.

## Revendications

1. Procédé de raccordement à liaison équipotentielle d'un réseau de retour courant dans un aéronef, ce réseau comportant des réseaux de retour de courant primaires longitudinaux par rapport au fuselage (110, 120, 130) localement éloignés les uns des autres, l'un d'eux (110) au moins étant formé d'éléments (111, 112, 113) espacés transversalement, de sorte que des liaisons équipotentielles relient les réseaux primaires pour former globalement un réseau de retour courant, **caractérisé en ce que** les liaisons sont constituées par un câblage aluminium (1) de forte section formant d'un seul tenant une liaison équipotentielle entre les réseaux primaires (110, 120, 130) ainsi qu'entre leurs éléments (111, 112, 113) espacés transversalement, les équipements étant électriquement connectés au plus près de leur localisation par des raccordements intermédiaires directs (2, 2', 2", 2"') successifs sur la liaison équipotentielle sans coupure de câblage, réalisés par assemblage électrique et mécanique serrés, chaque interconnexion présentant deux zones étanches (22) entourant une zone de contact centrale (21) par un dénudage en fenêtre (11).

2. Procédé de raccordement selon la revendication 1, dans lequel les assemblages sur le câble de chaque raccordement (2, 2', 2", 2"') sont réalisés par des techniques de solidarisation choisies parmi le vissage, le rivetage, le brasage, le soudage, le sertissage et le frettage.

3. Procédé de raccordement selon l'une quelconque des revendications précédentes, dans lequel une matière conductrice est appliquée sur le dénudage de gaine (11) avant assemblage de chaque interconnexion (2, 2', 2", 2"').

4. Procédé de raccordement selon l'une quelconque des revendications 1 ou 2, dans lequel un traitement de surface métallique (27) est appliqué pour améliorer le contact électrique et empêcher l'oxydation.

5. Procédé de raccordement selon l'une des revendications précédentes, dans lequel chaque raccordement présente une zone d'assemblage électrique (21 s) décalée par rapport à une zone de fixation (2p) de l'interconnexion (2, 2', 2", 2"').

6. Réseau de retour courant dans un aéronef, comportant des réseaux de retour de courant primaires longitudinaux par rapport au fuselage (110, 120, 130) localement éloignés les uns des autres, l'un d'eux (110) au moins étant formé d'éléments (111, 112, 113) espacés transversalement, de sorte que des liaisons équipotentielles relient les réseaux primaires pour former globalement un réseau de retour courant, **caractérisé en ce que** les liaisons sont constituées par un câblage aluminium (1) de forte section formant d'un seul tenant une liaison équipotentielle entre les réseaux primaires (110, 120, 130) ainsi qu'entre leurs éléments (111, 112, 113) espacés transversalement, les équipements étant électriquement connectés sur le câble (1) de la liaison équipotentielle, au plus près de leur localisation, par des raccords de dérivation équipotentiel en ligne (2, 2', 2", 2"') comportant un manchon métallique (2m) sensiblement cylindrique d'assemblage au câble (1) par solidarisation et un moyen de fixation (2p) prolongeant le manchon (2m) pour venir se fixer à un support (111) de l'équipement, ledit manchon d'assemblage (2m) se composant de deux portions d'extrémité (22) logeant chacune un joint d'étanchéité (25) et entourant une zone centrale de contact électrique (21) avec le câble (1) préalablement dénudé dans une fenêtre (11) formée à l'intérieur de la zone centrale (21).

7. Réseau selon la revendication précédente, dans lequel la solidarisation est un sertissage par poinçon et matrice.

8. Réseau selon l'une des revendications 6 ou 7, dans lequel les portions d'extrémité (22) sont serties sur une gaine isolante (12) du câble (1) avec un outillage du type dédié aux cosses en aluminium.

9. Réseau selon l'une des revendications 6 à 8, dans lequel le manchon (2m) possède une paroi interne recouverte d'une couche de protection métallique anticorrosion (27).

10. Réseau selon l'une quelconque des revendications 6 à 8, dans lequel la surface interne du manchon (2m) et l'âme dénudée (11) du câble (1) présentent des traitements de surface métalliques.

11. Réseau selon l'une quelconque des revendications 6 à 8, dans lequel l'âme dénudée (11) du câble est enduite d'une couche de graisse conductrice.

12. Réseau selon la revendication précédente, dans lequel un évidement (3) est formé entre le manchon (2m) et le câble (1), et entre la fenêtre dénudée (11) du câble (1) et au moins un joint (25) d'une portion d'extrémité (22) du manchon (2m) de sorte à pouvoir recueillir un excès de graisse formé lors du sertissage sans emprisonner cette graisse entre le joint (25) et le câble (1).

13. Réseau selon la revendication 11, dans lequel un canal (4) est formé à travers le manchon (2m) pour injecter la quantité de graisse conductrice de sorte que son extrémité débouche dans la zone de sertissage électrique (21 s) entre la fenêtre dénudée (11) du câble (1) et la face interne du manchon (2m), le sertissage étant apte à obturer ensuite ce canal (4) après orientation du manchon à l'aide des encoches (23).

## Patentansprüche

1. Verfahren zur Verbindung mit einer Äquipotentialverbindung eines Netzes zur Stromrückführung in einem Flugzeug, wobei das Netz primäre, longitudinale Netze zur Rückführung von Strom mit Bezug auf einen Flugzeugrumpf (110, 120, 130) umfasst, die örtlich weit voneinander entfernt sind, wobei eines von ihnen (110) zumindest aus Elementen (111, 112, 113) gebildet ist, die transversal beabstandet sind, so dass Äquipotentialverbindungen die primären Netze verbinden, um insgesamt ein Netz zur Rückführung von Strom zu bilden, **dadurch gekennzeichnet, dass** die Verbindungen aus einer Aluminiumverkabelung (1) mit einem großen Querschnitt bestehen, die aus einem einzigen Halter eine Äquipotentialverbindung zwischen den primären Netzen (110, 120, 130) sowie zwischen ihren Elementen (111, 112, 113) bildet, die transversal beabstandet sind, wobei die Einrichtungen möglichst nah bei ihrer Lage durch direkte, sukzessive Zwischenverbindungen (2, 2', 2", 2"') mit der Äquipotentialverbindung ohne Unterbrechung der Verkabelung verbunden sind, die durch eine elektrische und mechanische, gecrimpte Anordnung realisiert sind, wobei jede Zwischenverbindung zwei dichte Bereiche (22) aufweist, die einen zentralen Kontaktbereich (21) 'mit einer Abisolierung in einem Fenster (11) umgeben.

2. Verfahren zur Verbindung nach Anspruch 1, wobei die Anordnungen an dem Kabel von jeder Verbindung (2, 2', 2", 2"') durch Techniken der Befestigung ausgeführt werden, die unter Schrauben, Nieten, Löten, Schweißen, Crimpen und Schrumpfen ausgewählt sind.

3. Verfahren zur Verbindung nach einem der vorhergehenden Ansprüche, wobei ein leitfähiges Material auf die Abisolierung der Ummantelung (11) vor der Anordnung von jeder Zwischenverbindung (2, 2', 2", 2"') angewandt wird.

4. Verfahren zur Verbindung nach einem der Ansprüche 1 oder 2, wobei eine Behandlung der Metalloberfläche (27) angewandt wird, um den elektrischen Kontakt zu verbessern und die Oxidation zu verhindern.

5. Verfahren zur Verbindung nach einem der vorhergehenden Ansprüche, wobei jede Verbindung einen Bereich der elektrischen Anordnung (21 s) aufweist, der versetzt mit Bezug auf einen Befestigungsbereich (2p) der Zwischenverbindung (2, 2', 2", 2"') ist.

6. Netz zur Rückführung von Strom in einem Flugzeug, das primäre, longitudinale Netze zur Stromrückführung mit Bezug auf einen Flugzeugrumpf (110, 120, 130) umfasst, die örtlich weit voneinander entfernt sind, wobei eines von ihnen (110) aus Elementen (111, 112, 113) gebildet ist, die transversal beabstandet sind, so dass Äquipotentialverbindungen die primären Netze verbinden, um insgesamt ein Netz zur Rückführung von Strom zu bilden, **dadurch gekennzeichnet, dass** die Verbindungen aus einer Aluminiumverkabelung (1) mit einem großen Querschnitt bestehen, die aus einem einzigen Halter eine Äquipotentialverbindung zwischen den primären Netzen (110, 120, 130) sowie zwischen ihren Elementen (111, 112, 113) bildet, die transversal beabstandet sind, wobei die Einrichtungen möglichst nah bei ihrer Lage durch Verbindungen der Äquipotentialabzweigung (2, 2', 2", 2"') mit dem Kabel (1) in Serie verbunden sind, die eine metallische, im Wesentlichen zylindrische Muffe (2m) zur Anordnung an dem Kabel (1) durch eine Verbindung und ein Mittel zur Befestigung (2p) umfasst, welches die Muffe (2m) verlängert, um sich mit einer Halterung (111) der Einrichtung verbinden zu lassen, wobei sich die Muffe zur Anordnung (2m) aus zwei Endabschnitten (22) zusammensetzt, die jeweils eine Dichtungsfuge (25) beherbergen und einen zentralen, elektrischen Kontaktbereich (21) mit dem Kabel (1) umgeben, das vorher in einem Fenster (11) abisoliert wurde, das im Inneren des zentralen Kontaktbereichs (21) ausgebildet ist.

7. Netz nach dem vorangehenden Anspruch, wobei die Befestigung ein Crimpen durch einen Stempel und eine Matrize ist.

8. Netz nach einem der Ansprüche 6 oder 7, wobei die Endabschnitte (22) auf einer isolierenden Ummantelung (12) des Kabels (1) mit einem Werkzeug der Art gecrimpt sind, das für Aluminiumhülsen vorgesehen ist.

9. Netz nach einem der Ansprüche 6 bis 8, wobei die Muffe (2m) eine Innenwand besitzt, die mit einer metallischen, antikorrosiven Schutzschicht (27) bedeckt ist.

10. Netz nach einem der Ansprüche 6 bis 8, wobei die innere Oberfläche der Muffe (2m) und der abisolierte Kern (11) des Kabels (1) Behandlungen der metallischen Oberflächen aufweisen.

11. Netz nach einem der Ansprüche 6 bis 8, wobei der abisolierte Kern (11) des Kabels mit einer Schicht aus leitfähigem Fett bestrichen ist.

12. Netz nach dem der vorhergehenden Anspruch, wobei eine Ausnehmung (3) zwischen der Muffe (2m) und dem Kabel (1), und zwischen dem abisolierten Fenster (11) des Kabels (1) und mindestens einer Fuge (25) eines Endabschnitts (22) der Muffe (2m) ausgebildet ist, so dass ein Überschuss an Fett, der beim Crimpen gebildet wird, gesammelt wird, ohne das Fett zwischen der Fuge (25) und dem Kabel (1) einzusperren.

13. Netz nach Anspruch 11, wobei ein Kanal (4) durch die Muffe (2m) zum Injizieren der Menge an leitfähigem Fett so ausgebildet ist, dass sein Ende in dem elektrischen Crimpbereich (21 s) zwischen dem abisolierten Fenster (11) des Kabels (1) und der Innenfläche der Muffe (2 m) mündet, wobei das Crimpen geeignet ist, den Kanal (4) später nach der Orientierung der Muffe mit Hilfe von Ausnehmungen (23) abzudichten.

## Claims

1. Method for the equipotential-bonding connection of a current-return network in an aircraft, this network comprising primary current-return networks (110, 120, 130) that are longitudinal relative to the fuselage and remote from one another in terms of location, at least one of said networks (110) being formed by transversely spaced elements (111, 112, 113), such that equipotential connections join the primary networks so that altogether they form one current-return network, **characterised in that** the connections are formed by aluminium cabling (1) of large cross section that integrally forms an equipotential connection between the primary networks (110, 120, 130) and between their transversely spaced elements (111, 112, 113), the devices being electrically connected as closely as possible to their location by direct intermediate connections (2, 2', 2", 2"') that succeed one another along the equipotential connection without interrupting the cabling, which connections are produced by tight electrical and mechanical installation,
each interconnection having two impermeable regions (22) that surround a central contact region (21) by means of window-stripping (11).

2. Connection method according to claim 1, wherein each connection (2, 2', 2", 2"') is installed on the cable by rigid connection techniques selected from among screwing, riveting, soldering, welding, crimping and shrink-fitting.

3. Connection method according to either of the preceding claims, wherein a conductive material is applied upon sheath stripping (11) before each interconnection (2, 2', 2", 2"') is installed.

4. Connection method according to either claim 1 or claim 2, wherein a metal-surface treatment (27) is applied to improve electrical contact and prevent oxidation.

5. Connection method according to any of the preceding claims, wherein each connection has an electrical installation region (21 s) that is offset from a region (2p) for attaching the interconnection (2, 2', 2", 2"').

6. Current-return network in an aircraft, comprising primary current-return networks (110, 120, 130) that are longitudinal relative to the fuselage and remote from one another in terms of location, at least one of said networks (110) being formed by transversely spaced elements (111, 112, 113), such that equipotential connections join the primary networks so that altogether they form one current-return network, **characterised in that** the connections are formed by aluminium cabling (1) of large cross section that integrally forms an equipotential connection between the primary networks (110, 120, 130) and between their transversely spaced elements (111, 112, 113), the devices being electrically connected to the cable (1) of the equipotential connection as closely as possible to their location by in-line equipotential shunt connectors (2, 2', 2", 2"') comprising a substantially cylindrical metal sleeve (2m) for installation on the cable (1) by rigid connection and an attachment means (2p) that extends the sleeve (2m) so as to be attached to a bracket (111) for the device, said installation sleeve (2m) being composed of two end portions (22) that each accommodate a seal (25) and surround a central region (21) for electrical contact with the cable (1) having been pre-stripped in a window (11) formed within the central region (21).

7. Network according to the preceding claim, wherein the rigid connection is a crimping by punch and die.

8. Network according to either claim 6 or claim 7, wherein the end portions (22) are crimped onto an insulating sheath (12) of the cable (1) using a tool of the type for aluminium terminals.

9. Network according to any of claims 6 to 8, wherein the sleeve (2m) has an inner wall coated with an anti-corrosion protective metal coating (27).

10. Network according to any of claims 6 to 8, wherein the inner surface of the sleeve (2m) and the stripped core (11) of the cable (1) have metal surface treatments.

11. Network according to any of claims 6 to 8, wherein the stripped core (11) of the cable is coated with a conductive grease layer.

12. Network according to the preceding claim, wherein a recess (3) is formed between the sleeve (2m) and the cable (1), and between the stripped window (11) of the cable (1) and at least one seal (25) of an end portion (22) of the sleeve (2m) so as to be able to receive an excess of grease formed during crimping without trapping this grease between the seal (25) and the cable (1).

13. Network according to claim 11, wherein a channel (4) is formed through the sleeve (2m) for injecting the amount of conductive grease so that its end is in communication with the electrical crimping region (21 s) between the stripped window (11) of the cable (1) and the inner face of the sleeve (2m), the crimping then being able to seal this channel (4) after orienting the sleeve by means of notches (23).
